# EUROPEAN PATENT APPLICATION

(11) **EP 1 775 105 A1**
(43) Date of publication of application: **18.04.2007**
(21) Application number: 05022566.3
(22) Date of filing: 17.10.2005
(51) Int. Cl.: B29C 67/24, B29C 67/04, B65D 81/34, H05B 6/64

(54) **Microwavable composite material and fabrication method thereof**

(71) Applicant: Ting, Yen-Kai, Nei Pu Hsiang,Ping Tung Hsien Taiwan (TW)
(72) Inventor: Ting, Yen-Kai, Nei Pu Hsiang,Ping Tung Hsien Taiwan (TW)
(74) Representative: Horak, Michael

(57) **Abstract**

A solid composite material and its fabrication method are provided herein. The solid composite material is made by combining graphite, and ceramic, plastic, or Polytetrafluorethylene into a composite material; forming the composite material into a pre-determined shape; sintering or fusing the composite material into a fine, solid, composite material. As such, the solid composite material could be repeatedly used for unlimited number of times under high temperature without causing oxidation. The solid composite material could also absorb and prevent electromagnetic waves from penetration. Under microwaves having a controlled emission time and power, the solid composite material could be heated for warmth keeping.

## Description

### BACKGROUND OF THE INVENTION

### (a) Technical Field of the Invention

The present invention generally relates to composite materials and, more particularly, to a graphite composite material that can be heated up by microwaves for unlimited number of times.

### (b) Description of the Prior Art

Microwave technology has been widely applied in science, medicine, communications, industry, and agriculture arenas. In general, microwaves themselves are not ionizing radiation and therefore do not have any radioactivity. With a frequency range between 0.3 GHz and 300 GHz, microwaves exhibit both the reflection behavior of electromagnetic waves having a smaller wavelength, and the heating capability of electromagnetic waves having a larger wavelength. When a microwave enters into and propagates inside a medium, the energy carried by the microwave is transformed into a thermal energy. Unlike conventional cooking methods which heat up food indirectly by utilizing thermal conduction and radiation through the container of the food, microwaves excite polarizing molecules of the food (such as water, fats, and proteins) to collide with each other under the oscillation of the electromagnetic field established by the microwaves, and thereby heat up the food by the friction of the molecular collisions. On the other hand, non-polarizing materials such as air, glass, ceramic, and plastic are not excited by microwaves. Therefore, when a food is heated up, its container made of one of these non-polarizing materials does not exhibit much temperature change. Sometimes the container feels warm because of the heat conducted from the food. However, as all the water contained in the food is heated and evaporates, the microwaved food sometimes becomes too dry. In addition, that the container of the food cannot provide auxiliary heating is another factor affecting the taste and appearance of the microwaved food. As such, microwaves could not totally replace the conventional cooking methods.

### SUMMARY OF THE INVENTION

The primary purpose of the present invention is to provide a composite material and a fabrication method of the material. The composite material could absorb microwaves, keep warmth, and shield electromagnetic waves and, when the material is used for food containers, these containers could provide auxiliary heating when the food is microwaved.

To achieve the foregoing purpose, the composite material of the present invention is made of 10%~90% (in terms of weight) graphite, and 90%~10% consolidating material such as ceramic, plastic, and Polytetrafluorethylene (TEFLON). The fabrication method includes the following steps: (a) combine the graphite and consolidating materials in a 10%~90%:90%~10% ratio into a composite material; (b) form the composite material into a pre-determined shape; (c) sinter the composite material at a temperature between 600~2000°C, or fuse the composite material at a temperature between 80~180°C, into a fine, solid, composite material.

As such, the solid composite material could be repeatedly used for unlimited number of times under high temperature without causing oxidation. The solid composite material could also prevent electromagnetic waves from penetration by absorbing the electromagnetic waves. Under microwaves having a controlled emission time and power, the solid composite material could be heated to a small degree for warmth keeping.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a flow chart showing the processing steps of the fabrication method according to the present invention.
FIG 2 is sectional view showing the structure of the solid composite material having a vitrified surface according to a first embodiment of the present invention.
FIG 3 is a sectional view showing the structure of the solid composite material having a graphite material clad in a ceramic material according to a second embodiment of the present invention.
FIG 4 is a sectional view showing the structure of the solid composite material clad in a ceramic material according to a third embodiment of the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

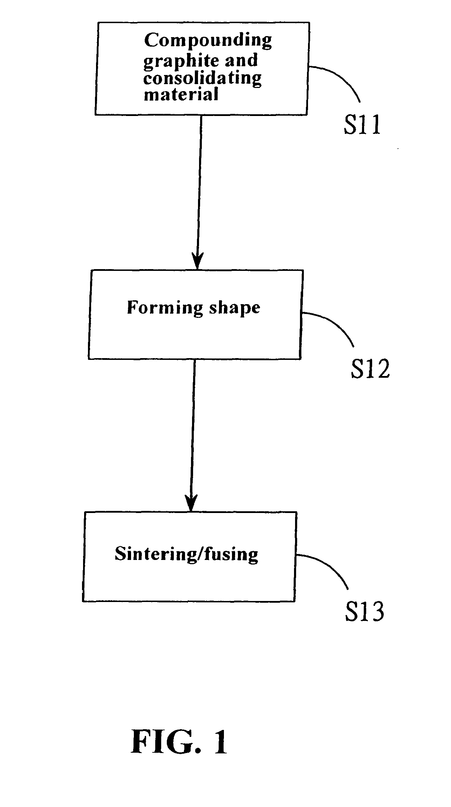

FIG. 1 is a flow chart showing the processing steps of the fabrication method according to the present invention. First, graphite is evenly combined with a consolidating material in a 10%~90%:90%~10% ratio into a composite material. Graphite is a commonly known non-metallic mineral that is electrically and thermally conductive, lubricating, plastic, resilient to high temperature, and chemically stable. Graphite is therefore widely applied in various industries. Until now, graphite is yet to be applied in microwave technology. According to experiment, graphite could absorb and transform electromagnetic waves into heat effectively, and could reach red hot condition (over 540°C) in a short period of time under microwaves. However, graphite based products should not be used in the atmosphere for a temperature over 500°C, as once over 400°C, graphite would begin to oxidize. The consolidating material is one that, after appropriately compounded, sintered or fused with graphite, would form a cladding layer around graphite to prevent its contact with the atmosphere, especially under high temperature. Depending on the temperature range that the solid composite material of the present invention is targeted, the consolidating material could be a ceramic, plastic, or Polytetrafluorethylene (TEFLON) material, or other flexible and anti-oxidation coating material.

In the following, without losing generality, a ceramic material is used as an example to explain the fabrication process of the present invention. In the second step, the composite material of evenly compounded graphite and the ceramic material is formed or pressed into a pre-determined shape. In the third step, the composite material is sintered at a temperature between 600~2000°C into a fine solid composite material. More specifically, the foregoing process of fabricating the solid composite material could have the following embodiments.

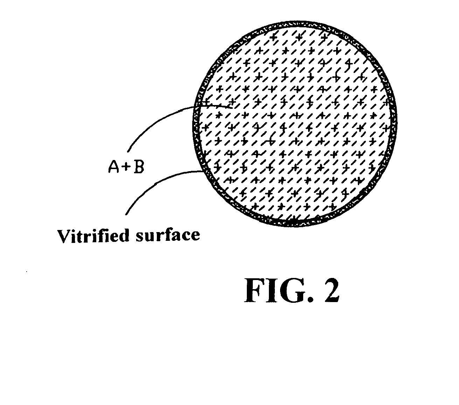

In a first embodiment, graphite 1 and a ceramic material 2 are evenly compounded in a 90%:10% ratio. The resulted composite material is then sintered at 1100°C to form a vitrified surface on the solid composite material, whose structure is illustrated in FIG. 2.

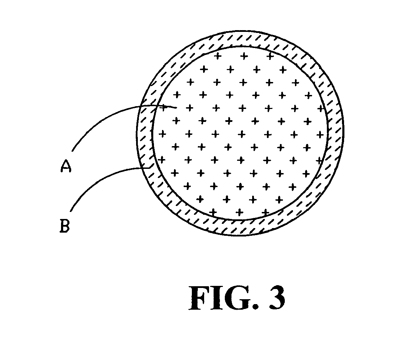

In a second embodiment, the ceramic material 2 is coated on the surface of the graphite 1 and then sintered. The resulting structure is illustrated in FIG. 3.

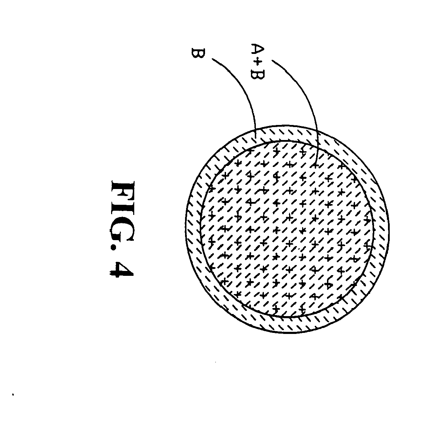

In a third embodiment, graphite 1 and the ceramic material 2 are evenly compounded in a 90%:10% ratio into a composite material, the ceramic material 2 is again coated on the composite material and then sintered. The resulting structure is illustrated in FIG. 4.

The foregoing ceramic material could contain clay, feldspar, crystal, glass, cement, enamel, or other appropriate fireproof material. In addition, grinding material, ceramic oxide (such as aluminum oxide, cobalt oxide), electronic material (such as ferrite magnet, BaTiO₃) are also considered ceramic materials. The characteristic of these materials lies in that they are in-organic, non-metallic materials and require high-temperature sintering in the fabrication process to form the final products. As such, with these materials wrap around the graphite, the resulted solid composite material could be heated by microwaves up to a temperature above 500°C repeatedly for unlimited number of times without causing oxidation. Furthermore, to enhance the appearance of the solid composite material, its surface could be glazed or painted and then sintered again at a temperature between 900~1300°C. If controlled under a highest temperature (such as 280°C), a coating layer of Polytetrafluorethylene (TEFLON) could further be formed on the surface of the solid composite material.

In addition, with the graphite's superior absorbing property, the present invention could also be applied to fabricate electromagnetic shielding or warmth keeping materials. For this application, the consolidating material could be plastic and the third step is to fuse the composite material at a temperature between 80~180°C. More specifically, the foregoing process of fabricating the solid composite material could have the following embodiments.

In a fourth embodiment, graphite and a plastic material are first evenly compounded in a 50%:50% ratio into a composite material, and the composite material is fused at 90°C. The resulting structure is that the solid composite material is wrapped in a plastic cladding layer.

In a fifth embodiment, the plastic material is coated on the surface of the graphite and then fused into a cladding layer.

In a sixth embodiment, graphite and the plastic material are first evenly compounded in a 50%:50% ratio into a composite material, the plastic material is again coated on the surface of the composite material, and then fused.

Fabricated as such, by controlling the microwave emission time and power, the solid composite material could be heated for a small degree for warmth keeping, or the solid composite material could be used to shield electromagnetic waves by absorbing them.

The solid composite material of the present invention has the following advantages. First, graphite is an excellent medium for microwave heating. The graphite composite material fabricated by the present invention could be used repeatedly and for an extended period of time under a high temperature without worrying about oxidation. With the present invention, microwaves could be used to replace conventional cooking methods. Secondly, the graphite composite material of the present invention could produce more heat than that produced by the microwaves alone. With the present invention, microwaves could replace less efficient fuel such as gas and coal. The present invention therefore would contribute both to energy saving and environmental protection. Thirdly, the present invention could shield electromagnetic waves by absorbing and turning them into heat. When excited by controlled microwaves, the present invention could be slightly heated for warmth keeping.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A solid composite material capable of being heated by microwaves comprising graphite and a consolidating material combined in a 10%~90%:90%~10% (in terms of weight) ratio.

2. The composite material according to claim 1, wherein said consolidating material is selected from one of the following materials: a ceramic material, a plastic material, and a Polytetrafluorethylene material.

3. A method for fabricating a solid composite material capable of being heated by microwaves comprising the following steps of:
(a)combining graphite and a consolidating material in a 10%~90%:90%~10% ratio into a composite material;
(b)forming the composite material into a pre-determined shape; and
(c)sintering the composite material at a temperature between 600~2000°C, or fusing the composite material at a temperature between 80~180°C, into said fine solid composite material.

4. The method according to claim 3, wherein said consolidating material is selected from one of the following materials: a ceramic material, a plastic material, and a Polytetrafluorethylene material.

5. The method according to claim 3, wherein said step (a) evenly compounds said graphite and said consolidating material.

6. The method according to claim 3, wherein a vitrified surface is formed on said solid composite material at said step (c).

7. The method according to claim 3, wherein said step (a) wraps said consolidating material around said graphite.

8. The method according to claim 3, wherein said step (a) evenly compounds said graphite and said consolidating material, and then coats said consolidating material on the surface of said composite material.

9. The method according to claim 3, further comprising the following step:
(dl)glazing said solid composite material and sintering said solid composite material at a temperature between 900~13000°C.

10. The method according to claim 3, further comprising the following step:
(d2)coating a Polytetrafluorethylene layer on the surface of said solid composite material.
